# EUROPEAN PATENT SPECIFICATION

(11) **EP 0 761 504 B1**
(45) Date of publication and mention of the grant of the patent: **29.09.1999**
(21) Application number: 96113613.2
(22) Date of filing: 26.08.1996
(51) Int. Cl.: B60R 13/10, B60R 19/50, B62D 35/00

(54) **A front number-plate holder with an anti-turbulence deflector for motor vehicles, particularly cars**
Vordere Kennzeichenschild-Halterung mit Turbulenzbildung verhinderndem Windabweiser für Kraftfahrzeuge
Support avant pour plaque minéralogique avec déflecteur d'anti-turbulence pour véhicule automobile

(30) Priority: 01.09.1995 IT TO950197 U
(43) Date of publication of application: 12.03.1997
(73) Proprietor: FIAT AUTO S.p.A., 10135 Torino (IT)
(72) Inventor: Azzali, Jonata, 26100 Cremona (IT)
(74) Representative: Serra, Francesco

(56) References cited:
- EP-A- 0 050 745
- WO-A-90/02671
- DE-A- 3 247 416
- DE-U- 8 700 476

## Description

The present innovation relates to a front number-plate holder with an anti-turbulence deflector for motor vehicles, particularly cars. In modern cars, the air for cooling the radiators which in turn are intended to cool units, for example the engine, disposed in the engine compartment of the motor vehicle, is taken in by dynamic-air intakes in the bumper; in this context, dynamic air means the air which enters the above-mentioned air intakes by virtue of the forward motion of the motor vehicle, and thus excludes the air originating from the movement of the fans associated with the radiators.

For contingent reasons such as aesthetics, legal requirements or simply available space, the front number-plate holder, which is intended in use to carry the front number plate of the motor vehicle, is sometimes fixed to the front bumper in a position such as partially to block the air-intakes in the bumper, possibly constituting an obstacle to the cooling of the radiators.

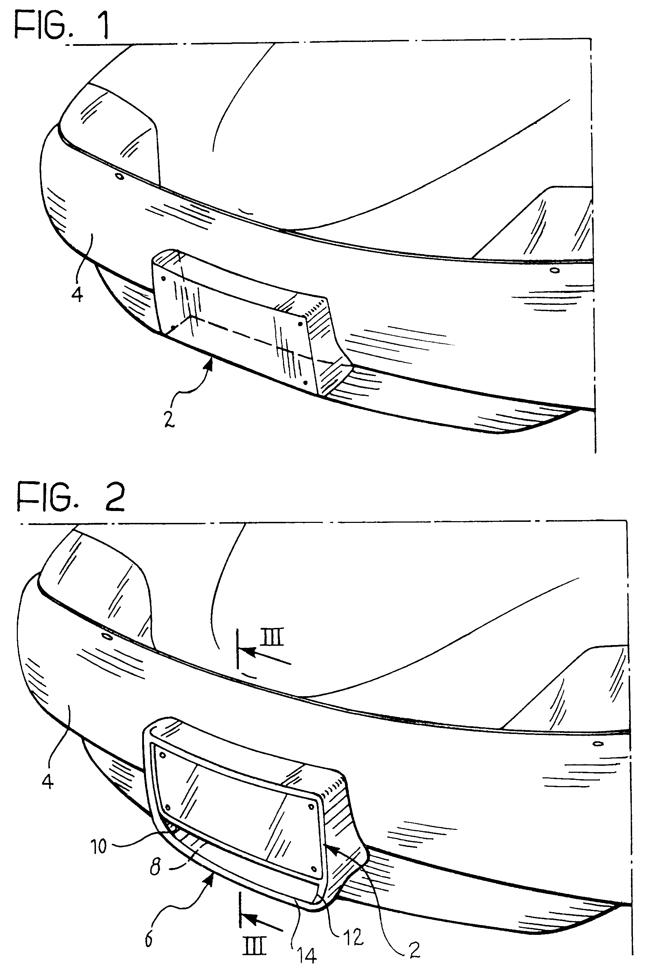

The foregoing is demonstrated in Figure 1 which shows a conventional front number-plate holder 2 fitted to the front bumper 4 of a motor vehicle (not shown). The number-plate holder 2 may be fixed to the bumper 4 by, for example, screwing.

The number-plate holder 2 clearly constitutes an obstacle to the entry of dynamic air through the air intake, not shown, (formed in the bumper 4 in the region housing the number-plate holder 2).

The object of the present innovation is to provide a number-plate holder for motor vehicles which prevents the aforementioned problems, is easy to construct, and is cheap.

The present innovation achieves the aforementioned objects by means of a number-plate holder which can be fixed to a bumper, preferably a front bumper, of a motor vehicle, and which has the specific characteristics recited in the following claims.

The innovation will now be described, purely by way of non-limiting example, with reference to the appended drawings, in which:
Figure 1 (already described) is a partial perspective view of a motor-vehicle front bumper with a number-plate holder according to the prior art,
Figure 2 is a partial perspective view of a motor-vehicle front bumper with a number-plate holder according to the innovation, and
Figure 3 is a section view taken in the plane III-III through the bumper and the number-plate holder of Figure 2.

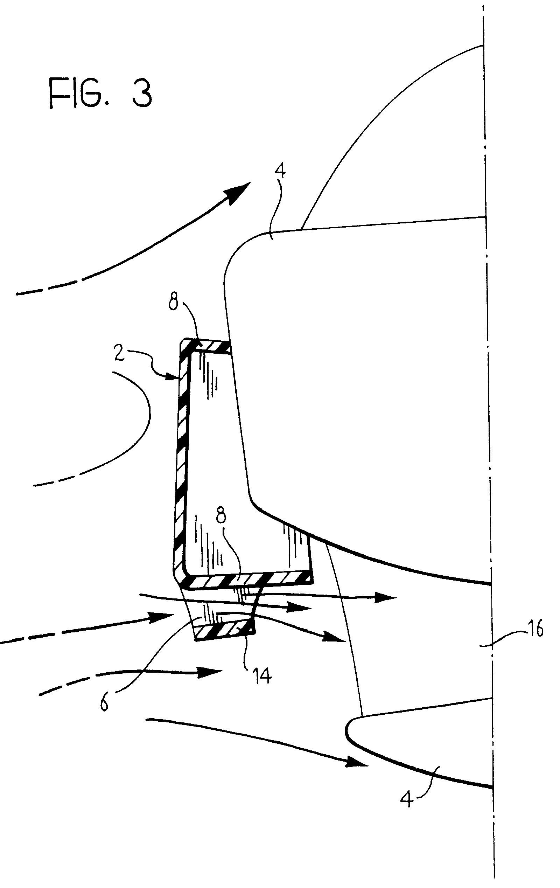

With reference to Figures 2 and 3, in which elements or parts identical with or equivalent to those already described with reference to Figure 1 are indicated by the same reference numerals, the number-plate holder 2 has an air intake 6 integral with the number-plate holder 2.

The integral air intake 6 has an upper, substantially horizontal wall 8 in common with the number-plate holder 2, first and second vertical walls 10 and 12, and a lower wall 14 shaped as a deflector directed towards the bumper 4.

The integral air intake 6 is disposed in the region of the dynamic air intake/s 16 in the bumper 4.

In use, when the car moves forwards, the air is intercepted by the number-plate holder and is diverted sideways and downwards but is "caught", so to speak, by the integral air intake which directs it towards the air intake/s in the bumper, as indicated in Figure 3.

The advantages of a front number-plate holder as just described are clear from the foregoing; practically all of the dynamic air reaches the radiators and the aerodynamic penetration of the vehicle is simultaneously improved.

Naturally, the principle of the innovation remaining the same, the details of construction and forms of embodiment may be varied widely with respect to those described and illustrated, without thereby departing from the scope of the present innovation as defined in the claims; for example, the longitudinal wall of the integral air intake opposite the number-plate holder may have a substantially upwardly arcuate shape forming a type of baffle in order better to direct the dynamic air towards the radiators.

## Claims

1. A number-plate holder (2) for fixing to a bumper, preferably a front bumper (4), of a motor vehicle, particularly a car, the bumper (4) comprising at least one air intake (16) for directing the dynamic air coming from the exterior when the motor vehicle is in motion towards the radiator/s for cooling the engine and/or other units present in the engine compartment of the motor vehicle, characterized in that the number-plate holder comprises an integral air intake (6) which has a channel-shaped cross-section and can direct the dynamic air striking the number-plate holder (2) towards the at least one air intake (16) formed in the bumper (4).

2. A number-plate holder (2) according to Claim 1, characterized in that the longitudinal wall (14) opposite the number-plate holder (2) constitutes a deflector for deflecting the dynamic air towards the at least one air intake (16).

3. A number-plate holder (2) according to any one of the preceding claims, characterized in that the longitudinal wall (14) opposite the number-plate holder (2) has a substantially upwardly arcuate shape.

## Patentansprüche

1. Kennzeichenhalterung (2) für die Befestigung an einer Stoßstange, vorzugsweise an der vorderen Stoßstange (4), eines Kraftfahrzeugs, im besonderen eines Personenkraftwagens, wobei die Stoßstange (4) zumindest einen Lufteinlass (16) besitzt, um die von außen kommende Stauluft, wenn sich das Kraftfahrzeug in Bewegung befindet, zum Kühler (zu den Kühlern) zu richten, um den Motor und/oder andere Aggregate zu kühlen, die sich im Motorraum des Kraftfahrzeugs befinden, dadurch gekennzeichnet, dass die Kennzeichenhalterung einen gemeinsam ausgebildeten Lufteinlass (6) besitzt, der einen kanalförmigen Querschnitt aufweist und die Stauluft, die auf die Kennzeichenhalterung (2) auftrifft, zu dem zumindest einen Lufteinlass (16) leiten kann, der in der Stoßstange (4) ausgebildet ist.

2. Kennzeichenhalterung (2) gemäß Anspruch 1, dadurch gekennzeichnet, dass die Längswand (14) gegenüber der Kennzeichenhalterung (2) eine Ablenkeinrichtung bildet, um die Stauluft zu dem zumindest einen Lufteinlass (16) abzulenken.

3. Kennzeichenhalterung (2) gemäß irgendeinem der bisherigen Ansprüche, dadurch gekennzeichnet, dass die Längswand (14) gegenüber der Kennzeichenhalterung (2) eine im wesentlichen nach oben gebogene Form besitzt.

## Revendications

1. Support de plaque minéralogique (2) destiné à être fixé sur un pare-chocs, de préférence un pare-chocs avant (4), d'un véhicule à moteur, en particulier une automobile, le pare-chocs (4) comportant au moins une entrée d'air (16) destinée à diriger l'air dynamique provenant de l'extérieur lorsque le véhicule à moteur est en mouvement vers le ou les radiateurs destinés à refroidir le moteur et/ou d'autres unités présentes dans le compartiment moteur du véhicule à moteur, caractérisé en ce que le support de plaque minéralogique comporte une entrée d'air intégrale (6) qui a une section en forme de canal et peut diriger l'air dynamique qui frappe le support de plaque minéralogique (2) vers la au moins une entrée d'air (16) formée dans le pare-chocs (4).

2. Support de plaque minéralogique (2) selon la revendication 1, caractérisé en ce que la paroi longitudinale (14) opposée au support de plaque minéralogique (2) constitue un déflecteur destiné à dévier l'air dynamique vers la au moins une entrée d'air (16).

3. Support de plaque minéralogique (2) selon l'une quelconque des revendications précédentes, caractérisé en ce que la paroi longitudinale (14) opposée au support de plaque minéralogique (2) a une forme courbe sensiblement vers le haut.
